# EUROPÄISCHE PATENTSCHRIFT

(11) **EP 0 963 931 B1**
(45) Veröffentlichungstag und Bekanntmachung des Hinweises auf die Patenterteilung: **17.08.2005**
(21) Anmeldenummer: 99109608.2
(22) Anmeldetag: 14.05.1999
(51) Int. Cl.: B65G 51/03, B65G 54/02

(54) **Fördervorrichtung zum Transportieren von Behältern**
Conveyor device for conveying containers
Dispositif de transport pour tranporter des récipients

(30) Priorität: 10.06.1998 DE 19825873
(43) Veröffentlichungstag der Anmeldung: 15.12.1999
(73) Patentinhaber: KHS Maschinen- und Anlagenbau Aktiengesellschaft, 44143 Dortmund (DE)
(72) Erfinder: Strohn, Gisbert, 58313 Herdecke (DE)

(56) Entgegenhaltungen:
- WO-A-97/09255
- DE-A- 4 133 114

## Beschreibung

Die Erfindung bezieht sich auf eine Fördervorrichtung zum Transportieren von Behältern, wie Kunststoff-Flaschen und dergleichen mit einem im Mündungsbereich angeordneten Halskragen, der auf Gleitbahnen gehalten und geführt ist, gemäss dem Oberbegriff von Anspruch 1. Eine derartige Fördervorrichtung ist aus WO-A-97/09255 bekannt.

Zum Transportieren von Kunststoff-Flaschen, insbesondere in der Getränkeindustrie, ist es ferner bekannt, die Flaschen mittels sogenannter Luftförderer zu transportieren, wobei Gleitbahnen vorgesehen sind, die sich innerhalb eines Luftfördersystems befinden. Das Luftfördersystem besteht aus einem Luftkanal mit seitlich oder von oben auf die Gefäße gerichteten Luftaustrittsdüsen, wobei durch erhöhte Luftaustrittsgeschwindigkeit eine entsprechende Fortbewegung der Flaschen erfolgt. Insbesondere in der Getränkeindustrie ist die in den Hallen befindliche Luft mit getränkeschädigenden Mikroorganismen und dergleichen kontaminiert, so daß auch die zur Fortbewegung der Kunststoff-Flaschen angesaugte Umgebungsluft entsprechend geschädigt ist. Bei der Art und Ausbildung des Lufttransportes läßt es sich nicht vermeiden, daß die angesaugte Luft in verstäktem Maße in das Flascheninnere vordringt und auf diese Weise eine Vorbelastung des Flascheninnenraumes verursacht. Dieses kann bei der anschließenden Befüllung solcher Kunststoff-Flaschen zu entsprechenden Schädigungen des Getränks führen.

Der vorliegenden Erfindung liegt die Aufgabe zugrunde, einen Förderer für Kunststoff-Flaschen, insbesondere im Bereich der Getränkeindustrie, zu schaffen, der einen ähnlich einfachen Transport zuläßt aber eine Beeinträchtigung des Behälterinnenraumes durch gezieltes Einströmen von Umgebungsluft ausschließt.

Diese Aufgabe wird mit der Fördervorrichtung gemäss Patentanspruch 1 gelöst.

Mit der erfindungsgemäß vorgeschlagenen Ausgestaltung ist eine geschlossene Gleitbahn für die Kunststoff-Flaschen durch die aneinandergereihten Schiebekörper gegeben, wobei die Schiebekörper bzw. deren Vorschubeinheiten selbst die Fortbewegung vollziehen. Die einzelnen Schiebekörper werden zweckmäßig durch auf Förderabschnitte verteilte Vorschubeinheiten angetrieben, so daß verschiedene Förderabschnitte aus einzelnen, nicht angetriebenen Schiebekörpern bestehen, denen eine Vorschubeinheit zu geordnet ist, die ihrerseits ebenfalls eine praktisch nahtlose Verbindung der Gleitbahn mit den weiteren Schiebekörpern sicherstellt.

Im nachfolgenden wird die Erfindung anhand eines Ausführungsbeispiels näher erläutert.

In der Zeichnung zeigt:
- Figur 1: eine Seitenansicht der Fördervorrichtung,
- Figur 2: einen Querschnitt dazu,
- Figur 3: die Anordnung einer Streckenführung und
- Figur 4: die Umlenkbereiche der Fördervorrichtung

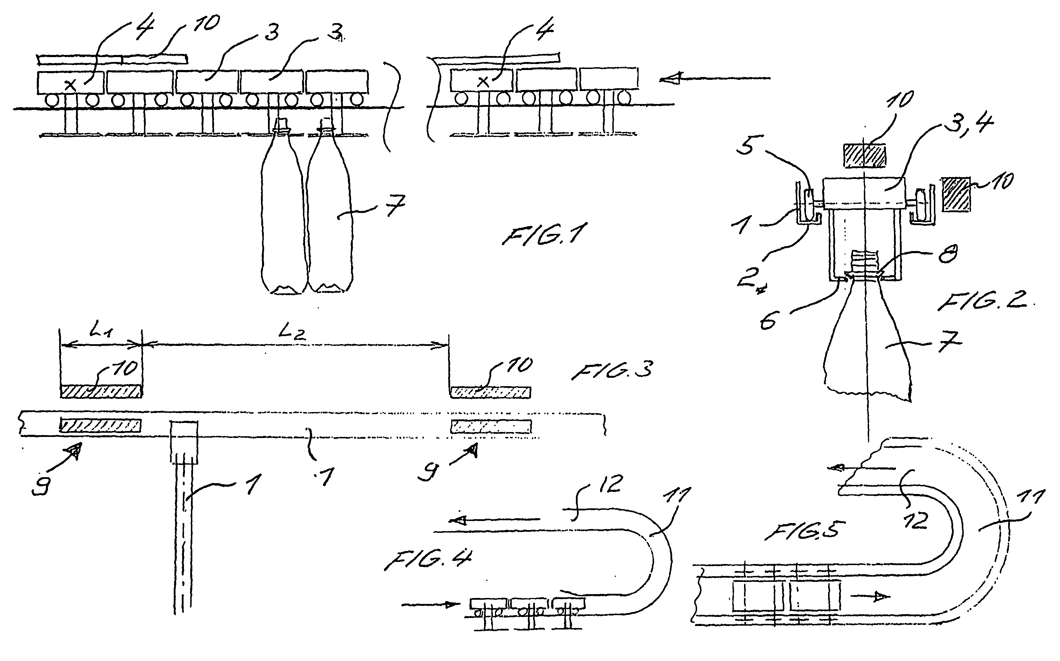

Im Ausführungsbeispiel besteht die Fördervorrichtung aus einem Fördergerüst 1, welches beispielsweise schienenartig ausgebildete Abstützflächen 2 für die Schiebekörper 3 und Vorschubeinheiten 4 aufweist. Diese können mit Laufrädern 5 oder Gleitschuhen oder anderweitig innerhalb des Fördergerüstes abgestützt sein. Jeder Schiebekörper 3 weist zudem eine Gleitbahn 6 auf, worauf sich ein im Mündungsbereich einer Flasche 7 angeordneter Halskragen 8 abstützt. Eine Vielzahl solcher hintereinander angeordneter Schiebekörper 3 bildet die eigentliche Transportebene für die zu transportierenden Flaschen 7. Dabei hat es sich als zweckmäßig erwiesen, daß einer bestimmten Zahl von hintereinander angeordneten nichtangetriebenen Schiebekörpern 3 ein weiterer angetriebener Schiebekörper als Vorschubeinheit 4 zugeordnet ist. Dieser bildet mit weiteren nachfolgenden Schiebekörpern und Vorschubeinheiten eine geschlossene Gleitbahn. Die einzelnen Vorschubeinheiten 4 der Schiebekörper 3 sind als Linearantrieb ausgebildet, wobei die Führungsebene der Schiebekörper 3 und Vorschubeinheiten 4 als Stator und die Vorschubeinheit selbst als Läufer ausgebildet ist. Der Antrieb erfolgt zweckmäß nach dem Wicklungsstator-Prinzip. Dieses ermöglicht, daß der Antrieb der Vorschubeinheiten 4 nur auf bestimmten Förderabschnitten wirksam sein muß und die auf dem nicht wirksamen Förderabschnitten befindlichen Schiebekörper und ggf. auch Vorschubeinheiten von der oder den Vorschubeinheiten, die sich im aktiven Förderabschnitt befinden, mitbewegt werden. Demzufolge sind bestimmte Abschnitte 9 des Fördergerüstes 1 mit einem Stator 10 ausgestattet, der die in diesem Bereich jeweils befindliche Vorschubeinheit 4 entsprechend fortbewegt und somit die vor dieser befindlichen Schiebekörper 3 ebenfalls mitbewegt und gegen die vorhergehende Vorschubeinheit ohne Zwischenraum anreiht. Die Länge solcher Antriebsabschnitte 9 und deren Abstände zueinander können entsprechend der erforderlichen Vorschubkraft frei gewählt werden. Es muß lediglich sichergestellt sein, daß die Gleitbahn 6 als geschlossene Flaschenträgerebene ausgebildet ist. Somit bilden praktisch alle Schiebekörper 3 der gesamten Fördervorrichtung eine geschlossene Gleitbahn für die zu bewegenden Flaschen 7.

Am Ende einer solchen Gleitbahn 6 bzw. des vorgesehenen Förderweges der Flaschen 7 bewegen sich die Schiebekörper zweckmäßig einer horizontalen (Fig. 5) oder vertikalen (Fig. 4) kreisförmigen Bahn 11 in den Leerförderabschnitt 12. Vor diesem Bereich kann die Übergabe der Behälter durch im Tangierungsbereich angeordnete Mitnahmeeinrichtungen erfolgen. Auch ist es möglich, die Behälter jeweils durch seitlich angreifende Transporteinrichtungen jeweils taktweise einzeln oder in größeren Stückzahlen auszuführen und zu den betreffenden Behandlungsmaschinen weiterzuführen.

Besonders vorteilhaft können entsprechende Weichenanordnungen zur Zu- und Abführung einzelner Flaschengruppen zu oder von weiteren Zwischenbahnen oder Behandlungsmaschinen eingegliedert sein.

## Patentansprüche

1. Fördervorrichtung zum Transportieren von Behältern wie Kunststoff-Flaschen und dergleichen mit einem im Mündungsbereich angeordneten Halskragen, der auf Gleitbahnen gehalten und geführt ist, wobei die Gleitbahn (6) aus einer Vielzahl von hintereinander angeordneten, bewegbaren Schiebekörpern (3) besteht, die entlang einer eigenen Führungsebene (2) fortbeweglich gelagert sind, ***dadurch gekennzeichnet*, dass**, die Schiebekörper (3) nicht miteinander verbunden und unabhängig voneinander bewegbar sind, und dass der Antrieb anhand mindestens eines, als Vorschubeinheit ausgebildeten Schiebekörpers erfolgt.

2. Fördervorrichtung gemäß Anspruch 1, ***dadurch gekennzeichnet,* dass** einer bestimmten Anzahl von nicht angetriebenen Schiebekörpern (3) mindestens ein antreibbarer Schiebekörper (4) zugeordnet ist.

3. Fördervorrichtung gemäß den Ansprüchen 1 oder 2, ***dadurch gekennzeichnet,* dass** die Schiebekörper (3) auf der Behälterförderstrecke eine geschlossene Gleitbahn (6) bilden, auf der bei aufgestauten Gefäßen die jeweiligen angetriebenen Schiebekörper (4) mit den nichtangetriebenen Schiebekörpern (3) weiterbewegt werden und eine Abstützung der Gefäße durch die bewegte Reihe von Schiebekörpern erfolgt.

4. Fördervorrichtung gemäß den vorhergehenden Ansprüchen, ***dadurch gekennzeichnet,* dass** der Antrieb der Vorschubeinheiten (4) nur auf bestimmten Förderabschnitten (9) wirksam ist und die auf den nicht wirksamen Förderabschnitten befindlichen Schiebekörper und Vorschubeinheiten von der oder den Vorschubeinheiten (4) im aktiven Förderabschnitt (9) mitbewegt werden.

5. Fördervorrichtung gemäß den vorhergehenden Ansprüchen, ***dadurch gekennzeichnet,* dass** die Vorschubeinheit (4) als Linearantrieb ausgebildet ist.

6. Fördervorrichtung nach den vorhergehenden Ansprüchen, ***dadurch gekennzeichnet,* dass** die Gleitbahn (6) am Ende ihres Förderweges kreisförmig zurückgeführt ist und eine Übergabevorrichtung für die Behälter (7) aufweist.

7. Fördervorrichtung nach den vorhergehenden Ansprüchen, ***dadurch gekennzeichnet,* dass** die Übergabe der Behälter (7) taktweise erfolgt, wobei eine Vielzahl von Behältern (7) abschnittsweise übergeben wird.

8. Fördervorrichtung nach Anspruch 1 und 2, ***dadurch gekennzeichnet,* dass** die Führungsebene (2) der Schiebekörper (3, 4) als Stator (10) und der Schiebekörper (3, 4) als Läufer ausgebildet ist.

9. Fördervorrichtung nach Anspruch 1, ***dadurch gekennzeichnet,* dass** der Antrieb der Schiebekörper (4) nach dem Wicklungsstator-Prinzip erfolgt.

## Claims

1. Conveying apparatus for conveying containers such as plastics material bottles and the like, said containers having a neck collar, which is disposed in the mouth region and is retained and guided on a guideway, wherein the guideway (6) comprises a plurality of moveable sliding bodies, which are disposed one behind the other and are mounted so as to be progressively moveable along a specific guide plane, **characterised in that** the sliding bodies (3) are not interconnected and are moveable independently from each another, and **in that** the driving means is effected by way of at least one sliding body which is in the form of an advancing unit.

2. Conveying apparatus according to claim 1, **characterised in that** at least one driveable sliding body (4) is associated with a certain number of non-driven sliding bodies (3).

3. Conveying apparatus according to claims 1 or 2, **characterised in that** the sliding bodies (3) form a closed guideway (6) on the container conveying track, on which closed guideway, when the containers have accumulated, the respective driven sliding bodies (4) are moved on further with the non-driven sliding bodies (3) and the containers are supported by the moved row of sliding bodies.

4. Conveying apparatus according to the preceding claims, **characterised in that** the driving means of the advancing units (4) is only effective on specific conveying sections (9) and the sliding bodies that are situated on the non-effective conveying sections and the advancing units are entrained by the advancing unit or units (4) in the active conveying section (9).

5. Conveying apparatus according to the preceding claims, **characterised in that** advancing unit (4) is configured as a linear driving means.

6. Conveying apparatus according to the preceding claims, **characterised in that** the guideway (6) is curved back at the end of its conveying path and includes a transfer apparatus for the containers (7).

7. Conveying apparatus according to the preceding claims, **characterised in that** the transfer of the containers (7) is effected in a pulse-like manner, wherein a plurality of containers (7) is transferred section by section.

8. Conveying apparatus according to claim 1 and 2, **characterised in that** the guide plane (2) of the sliding bodies (3, 4) is in the form of a stator (10) and the sliding bodies (3, 4) are in the form or runners.

9. Conveying apparatus according to claim 1, **characterised in that** the driving means of the sliding bodies (4) is effected according to the winding stator principle.

## Revendications

1. Convoyeur destiné au transport de récipients, tels que des bouteilles en matière synthétique et similaires, comprenant une collerette située dans la zone de l'embouchure, qui est maintenue et guidée sur des glissières, la glissière (6) étant constituée d'une pluralité de corps coulissants (3) mobiles, situés les uns derrière les autres, qui sont montés déplaçables vers l'avant le long d'une surface de guidage (2) qui leur est propre, **caractérisé en ce que** les corps coulissants (3) ne sont pas reliés les uns aux autres et peuvent se déplacer indépendamment les uns des autres, et **en ce que** l'entraînement est effectué par au moins un corps coulissant, conformé en unité d'avance.

2. Convoyeur selon la revendication 1, **caractérisé en ce qu'**à un nombre déterminé de corps coulissants (3) non entraînés est associé au moins un corps coulissant (4) susceptible d'être entraîné.

3. Convoyeur selon les revendications 1 ou 2, **caractérisé en ce que** les corps coulissants (3) forment, sur le parcours de convoyage des bouteilles, une glissière (6) fermée sur laquelle, lorsque les récipients s'accumulent, les différents corps coulissants (4) entraînés peuvent être déplacés avec les corps coulissants (3) non entraînés, et les récipients sont soutenus par la rangée déplacée de corps coulissants.

4. Convoyeur selon les revendications précédentes, **caractérisé en ce que** l'entraînement des unités d'avance (4) n'est actif que sur certains tronçons de convoyage (9) et **en ce que** les corps coulissants et unités d'avance présents sur les tronçons de convoyage non actifs sont également déplacés par la ou les unité(s) d'avance (4) située(s) dans le tronçon de convoyage (9) actif.

5. Convoyeur selon les revendications précédentes, **caractérisé en ce que** l'unité d'avance (4) est conformée en entraînement linéaire.

6. Convoyeur selon les revendications précédentes, **caractérisé en ce que** la glissière (6), à l'extrémité du parcours, revient en formant un cercle et comprend un dispositif de transfert des récipients (7).

7. Convoyeur selon les revendications précédentes, **caractérisé en ce que** le transfert des récipients (7) s'effectue de façon cadencée, une pluralité de récipients (7) étant transférée par tronçons.

8. Convoyeur selon la revendication 1 et 2, **caractérisé en ce que** le plan de guidage (2) des corps coulissants (3, 4) est conformé en stator (10), et les corps coulissants (3, 4) sont conformés en rotor.

9. Convoyeur selon la revendication 1, **caractérisé en ce que** l'entraînement des corps coulissants (4) s'effectue suivant le principe du stator à enroulement.
